Europäisches Patentamt

(19) European Patent Office

Office européen des brevets

(11) **EP 0 453 173 B1**

(12) **EUROPEAN PATENT SPECIFICATION**

(45) Date of publication and mention
of the grant of the patent:
**11.12.1996 Bulletin 1996/50**

(51) Int. Cl.$^6$: **C01B 39/00**, B01J 29/06

(21) Application number: **91303177.9**

(22) Date of filing: **10.04.1991**

(54) **Modified crystalline aluminosilicate zeolites and process for their preparation**

Veränderte kristalline Aluminosilikat-Zeolithe und Verfahren zu ihrer Herstellung

Zéolites, aluminosilicates cristallines modifiées et leur procédé de préparation

(84) Designated Contracting States:
**DE FR GB IT NL**

(30) Priority: **11.04.1990 JP 95570/90**

(43) Date of publication of application:
**23.10.1991 Bulletin 1991/43**

(73) Proprietor: **CATALYSTS & CHEMICALS INDUSTRIES CO., LTD.**
**Chiyoda-ku Tokyo (JP)**

(72) Inventors:
 • **Sato, Goro**
 **Kitakyushu-shi, Fukuoka-ken (JP)**
 • **Arima, Yusaku**
 **Kitakyushu-shi, Fukuoka-ken (JP)**
 • **Ida, Takanori**
 **Kitakyushu-shi, Fukuoka-ken (JP)**

(74) Representative: **Williams, John Francis et al**
 **WILLIAMS, POWELL & ASSOCIATES**
 **34 Tavistock Street**
 **London WC2E 7PB (GB)**

(56) References cited:
 **EP-A- 0 244 056      US-A- 4 093 560**
 **US-A- 4 503 023**

## Description

This invention relates to a modified crystalline aluminosilicate zeolite and a process of making the same.

There are known a variety of zeolites, of which the so-called ultrastable Type Y zeolites have become widely acclaimed for their commercial value.

A typical example of the process for preparing such zeolite compositions is disclosed in U.S. Patent 3,929,672 which comprises calcining an ammonium-sodium Y zeolite containing about 0.6 - 5 weight-percent of sodium as $Na_2O$, said calcining being carried out at a temperature between about 600° and 1650°F in contact with at least about 0.2 psi of water vapor for a sufficient time to substantially reduce the unit cell size of said zeolite and bring it to a value between about 24.40 and 24.64 Å; and subjecting the calcined zeolite to further ammonium ion exchange under conditions adjusted to replace at least about 25 percent of its residual zeolite sodium ions with ammonium ions and produce a final product containing less than about 1 weight-percent $Na_2O$.

Another prior art process is taught in U.S. Patent 3,506,400 whose claim 1 reads on a process for increasing the silica/alumina mole ratio in the crystal lattice of a crystalline aluminosilicate zeolite of the molecular sieve type, which molecular sieve is at least partially in its hydrogen form, said process comprising in combination: treating said molecular sieve at an elevated temperature within the range of about 800 to 1500°F in an atmosphere containing at least 2% water for a period of time sufficient to effect removal of at least some alumina tetrahedra from said molecular sieve crystal lattice, said alumina forming an amorphous phase in said molecular sieve; and then contacting the thus treated molecular sieve with an agent, selected from the group consisting of the dilute mineral acids and the organic acid chelating agents, selective for the removal of alumina, whereby an aluminosilicate zeolite molecular sieve is obtained having an enhanced silica/alumina mole ratio with at least substantial retention of the degree of crystallinity of said molecular sieve.

Because of the possibility of acid treatment of zeolites such as of faujasite type leading to the disruption of the crystalline structure of the zeolite, both of the above cited prior art processes rely on partial exchange of alkali metal in the zeolite with ammonium ions to somewhat enhance its hydrothermal stability and on steam calcination to reduce the unit cell size of the zeolite thereby providing increased stability to acids and heat, followed by dealumination to provide greater $SiO_2/Al_2O_3$ ratios. It was further necessary after calcination to again subject the zeolite to exchange with ammonium ions so as to achieve sufficient reduction of its alkali metal ions. These steps of treatment add up to time-consuming and costly manufacture of the intended ultrastable zeolites. The prior processes have a further drawback in that the resultant zeolites have somewhat defective crystal structure and insufficient thermal stability due to the lack of positive silicon supply to the sites of the structure which have been dealuminated.

Improved processes have been proposed for the manufacture of modified zeolites rendered relatively free of structural defects or degradation by replacing aluminum ions with silicon ions. One such process is disclosed in EP-0,072,397 in which the zeolite is subjected to gas-phase reaction with gaseous halogenated silane. This compound is highly reactive with water and easily polymerizable perse and therefore difficult to handle. Another such process is shown in U.S. Patent 4,711,770 in which the zeolite is treated in an aqueous phase with fluorosilicate. Still another such process is taught in EP-0,244,056 which employs for example ammonium hydrogen fluoride ($NH_4 \cdot HF$) as a fluoride ion source. These two processes commonly use fluorine compounds which tend to produce hydrogen fluoride in the reaction system. The presence of hydrogen fluoride poses a corrosion problem which demands installation of corrosion-proof manufacturing equipment and a further problem in that a starting zeolite if containing an alkali metal would suffer separation from cryolite ($Na_3AlF_6$).

With the foregoing difficulties of the prior art processes in view, the present invention seeks to provide a process of preparing such modified crystalline aluminosilicate zeolites at a relatively low cost which have sufficient acid stability and thermal stability to withstand elevated temperatures encountered typically in many catalyst systems for hydrocarbon conversion as well as for denitration to which the zeolite is applied.

According to one aspect of the invention, there is provided a process for the manufacture of a modified crystalline aluminosilicate zeolite which comprises the steps of: (a) contacting a starting faujasite crystalline aluminosilicate zeolite having a silica/alumina mole ratio of not more than 6 and a unit cell size of 24.65A or greater in an aqueous phase with a dealuminating agent selected from the group consisting of sulfuric acid, nitric acid and chloric acid at a pH value not exceeding 4 in the presence of a soluble silica present in an amount of not less than 130 ppm in said aqueous phase and derived from a soluble silica source selected from the group consisting of silicic acid, metasilicate, orthosilicate, disilicate, trisilicate and silica sol; and (b) recovering a modified faujasite crystalline aluminosilicate zeolite having a crystalline lattice with a silica/alumina mole ratio of more than 6 and a crystallinity of at least 91 % relative to that of said starting zeolite.

According to another aspect of the invention, there is provided a novel modified faujasite crystalline aluminosilicate zeolite composition which has a silica/alumina mole ratio of more than 6 and an ammonium ion exchange degree of more than 0.70 without having encountered a thermal history of above 150°C.

Briefly stated, the process of the invention comprises contacting a crystalline aluminosilicate zeolite in an aqueous phase with a dealuminating agent at a pH value of not exceeding 4 in the presence of a soluble silica.

The above and other advantages and features of the invention will appear clear from the following detailed description.

Figure 1 graphically depicts the differential thermal analysis of 91% exchanged $NH_4$-Y and Inventive Examples 2 and 3 zeolites, respectively; and

Figure 2 graphically depicts the ion exchange isotherms of Inventive Example 2 zeolite and Comparative Example 4 zeolite, respectively.

The term "crystalline aluminosilicate zeolite" is used to designate Type A, Type L, Type W, Type X, Type Y and Type ZSM zeolites as well as mordenite in the natural or synthesized form. Faujasite zeolites such as zeolite Y having silica/alumina mole ratios exceeding 3 are of particular value as catalytic materials for various processes including hydrocarbon conversion and isomerization. The starting zeolite contemplated by the invention may contain large proportions of alkali metal, or may be one having the alkali metal exchanged with ammonium ions, or one having aluminum removed from the crystal structure of the zeolite.

The term "soluble silica" is used herein to designate a silica which is capable of forming a yellowish molybdosilica upon reaction with ammonium molybdate in acidic aqueous solution of sulfuric acid. The soluble silica source includes silicic acid represented by $xSiO_2 \cdot yH_2O$ such as orthosilicic acid and methasilicic acid, silicate such as metasilicate, orthosilicate, disilicate and trisilicate, silica sol having highly polymerized silicic acid, silane compound and the like which may be soluble only appreciably. According to the invention, the soluble silica is present preferably in an amount of not less than 130 ppm in an aqueous solution. Less soluble silica than 130 ppm in the aqueous solution would result in disrupted crystal structure of the zeolite upon acid treatment.

The dealuminating agent used in the invention includes mineral acids such as sulfuric acid, nitric acid and chloric acid, an organic acid such as acetic acid and a chelating agent such as EDTA, of which sulfuric, nitric and chloric acids are particularly preferred.

According to the invention, the starting zeolite is suspended in an aqueous phase in which a soluble silica is present and subsequently contacted slowly with a dealuminating agent at pH of lower than 4. More specifically, the zeolite is suspended in an aqueous solution containing small quantities of a soluble silica such as silicic acid and thereafter slowly added with a soluble silica source such as silicic acid and a dealuminating agent such as sulfuric acid with stirring at increased temperature thereby adjusting the suspension to pH below 4, followed by washing and drying to obtain a modified zeolite composition. Addition of the dealuminating agent should preferably be slower than 0.2 mol dealuminating agent/hr./mole zeolite. The suspension temperature, though not critically limited, is preferably in the range of 50° - 100°C.

With faujasite zeolite of relatively low acid stability having silica/alumina ratios of about 3 - 6 and a unit cell size of 24.65 Å or greater, the zeolite crystal structure is susceptible to disruption when their suspension pH is brought to less than 4. This tendency is pronounced with zeolites containing large proportions of alkali metal. Such zeolites thereofore being not sufficiently dealuminated would be practically ineligible for a successful starting material.

According to the process of the invention, the dealumination or removal of alumina from the zeolite structure is effected concurrently with the introduction of silicon into the dealuminated sites so that the suspension pH can be held to well below 4, possibly even below 1 without causing disruption or degradation of the crystal structure of such a faujasite zeolite with low acid stability. Higher pH than 4 is undesirable because of inadequate dealumination from the zeolite structure. The starting zeolite should therefore be contacted with the dealuminating agent at pH less than 3.

The alumina/silica mole ratio and the unit cell or lattice size in a modified zeolite of the invention can be effectively controlled by the amount of addition of the dealuminating agent which governs the amount of alumina removed from the crystal structure of the zeolite. With the starting faujasite zeolite, there can be obtained a modified zeolite having a silica/alumina mole ratio of above 6, preferably between 7 and 30 and a unit cell size adjusted to less than 24.65 Å, preferably to between 24.55 Å and 24.30 Å.

The present invention also provides a modified faujasite crystalline aluminosilicate zeolite composition which a silica/alumina mole ratio of more than 6 and an ammonium ion exchange degree of more than 0.7 without having encountered a thermal history of above 150°C. By this thermal history is meant that the starting zeolite or the modified faujasite zeolite has not been subjected to calcination at temperatures above 150°C.

The term ammonium ion exchange degree as used herein is defined by Donald W. Breck in his article headed "Ion Exchange Reactions in Zeolites" in the Zeolite Molecular Sieves, Chapter Seven, A Wiley-Interscience Publication (1974). To obtain this value, experiments were conducted in which a sample of faujasite zeolite without a thermal history of above 150°C is suspended in ten-fold deionized water and the suspension was added with a salt (NaCl) in an amount corresponding to ten times the alumina moles (m) derived from the composition analysis of the zeolite sample, followed by heating up to 80°C with stirring. At this temperature, 3.0 weight % NaOH solution was added to adjust the suspension to pH of 8.5 and the suspention was stirred for one hour, followed by heating to 90°C and stirring for another thirty minutes. The resultant suspension was filtrated and washed with 80°C water until there was obtained a zeolite composition in which sodium ion exchange was complete. The $Na^+$ exchange zeolite was then suspended in ten-fold deionized water and then added with ammonium sulfate in an amount corresponding to five times the alumina moles (m) derived analytically from the starting zeolite composition, followed by heating up to 80°C with stirring. The suspension at this temperature was stirred for one hour and thereafter filtrated, washed with 80°C water and dried at 120°C over twenty four hours until there was obtained an ammonium ion exchanged zeolite species (A).

The above same procedure was followed in preparing another ammonium ion exchanged zeolite species (B) except that sodium was replaced with ten times as much ammonium sulfate.

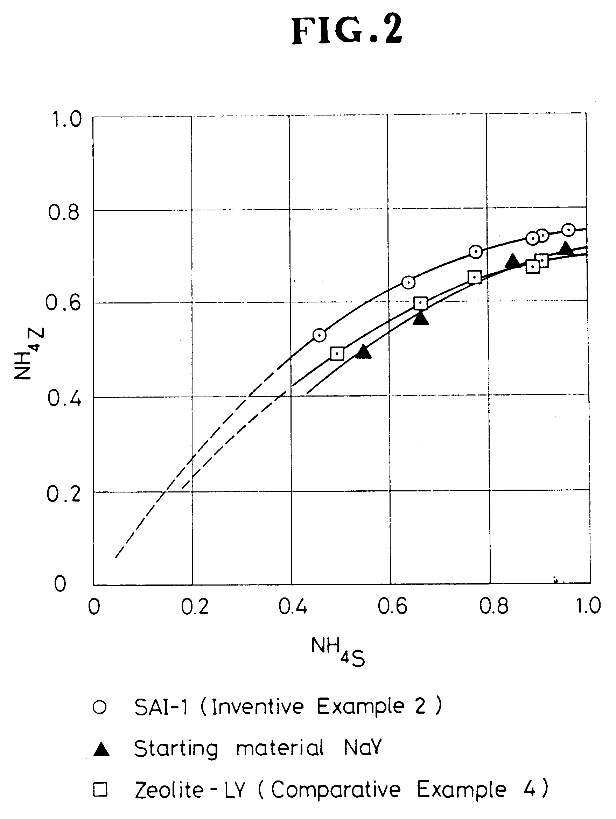

The ammonium ion exchange degree ($NH_4Z$) according to the invention is derived from a graphical display in which the equivalent fractions of the exchanging ions $NH_4^+$ in the solution (abscissa) are plotted against the equivalent fractions of the exchanging ions $NH_4^+$ in the zeolite (ordinate) to draw an ion exchange isotherm at 80°C based on the experimental data of the above two species (A) and (B), which isotherm represents an ammonium ion exchange degree in the zeolite at a value on the ordinate corresponding to a value of 0.9 on the abscissa. A typical example of such ion exchange isotherm is shown in Figure 2.

The ammonium ion exchange degree ($NH_4Z$) for conventional faujasite zeolites such as Type Y zeolite which have no thermal history of above 150°C is normally about 0.68. Generally, zeolites with lower silica/alumina ratios demonstrate a relatively high ammonium ion exchange degree, but those with such ratios above 5 can hardly reach beyond 0.70 as determined by the above noted method. What has heretofore been done therefore to increase the exchange degree is to repeatedly carry out the ammonium ion exchange or to calcine the zeolite at an elevated temperature of about 400° - 700°C and then effect the ammonium ion exchange.

It has now been found that ammonium ion exchange degrees of as high as 0.70, preferably 0.72 can be achieved with modified faujasite zeolite compositions free of a thermal history (above 150°C) by contacting the zeolite with one or more of acids of the group consisting of sulfuric, nitric and chloric acids at a pH value of less than 4 in the presence of a soluble silica of the character defined herein above. This is believed to be due to the fact that the unit cells forming the hexagonal prisms (site I) in the crystal structure of the zeolite, which are considered most difficult for ammonium ion exchange are preferentially dealuminated and silicon is then introduced into the dealuminated sites and further that the amount of aluminum in the unit cells against total alumina in the crystal structure is relatively small as compared to conventional faujasite zeolites.

It is known that the ratio of silica/alumina in the zeolite structure is intimately correlated to the unit cell size of the zeolite. The modified faujasite zeolite compositions of the invention have such a silica/alumina ratio of more than 6, preferably more than 7, more preferably more than 8.

The invention will be further described by way of the following examples.

Inventive Example 1

464 grams of starting NaY zeolite ($Na_2O \cdot Al_2O_3 \cdot 5SiO_2$ by mole composition) were suspended in 4640 cc of 80°C water. To the resulting suspension were added 310 grams of a silicic acid solution prepared by dealkalizing a water glass ($SiO_2/Na_2O = 3$, diluted in silica concentration to 1%) with an ion exchange resin. Sulfuric acid of 25% concentration was then added continuously at a rate of 67.5 cc per hour with stirring at 80°C. During this sulfuric acid addition, a small sample of zeolite was taken, washed, dried at 110°C and subjected to crystallinity measurement by X-ray diffraction with the results indicated in Table 1 which shows the relations between the amount of sulfuric acid added and the crystallinity of the zeolite.

Comparative Example 1

The procedure of Inventive Example 1 was followed except that the silic acid solution was not added.

Table 1

| Amount of H$_2$SO$_4$ (mole/mole · zeolite) | Comparative Example 1 | | Inventive Example 1 | |
|---|---|---|---|---|
| | pH/80°C | crystallinity* | pH/80°C | crystallinity* |
| 0 | 9.21 | 100 | 9.21 | 100 |
| 0.16 | 3.04 | 86 | 3.10 | 96 |
| 0.50 | 2.69 | 84 | 2.65 | 94 |
| 1.00 | 2.40 | 71 | 2.38 | 92 |
| 1.65 | 2.18 | 50 | 2.15 | 91 |

Note:
* Indicated is a relative value based on 100% crystallinity of starting NaY zeolite

Inventive Example 2

464 grams of starting NaY zeolite (Na$_2$O · Al$_2$O$_3$ · 5SiO$_2$ by mole composition) were suspended in 4640 cc of 80°C water. A water glass (SiO$_2$/Na$_2$O = 3, diluted in silica concentration to 1%) was neutralized with sulfuric acid to prepare 4500 grams of silicic acid solution having a pH value of 2.0. 310 grams of this solution were added with stirring to the zeolite suspension and heated to 95°C. 4190 grams of the remaining silicic acid solution and 8820 grams of 2.5% sulfuric acid were continuously added at the rates of 83.8 grams per hour and 176.4 grams per hour, respectively, thereby adjusting the system to pH of 2.0. Thereafter, the zeolite was separated, washed, dried and subjected to chemical composition analysis and further to X-ray diffraction to determine its crystallinity and unit cell size, with the results shown in Table 2. The resulting modified zeolite referred to as SAI-1 and starting NaY zeolite material were checked for their respective ammonium ion exchange properties by the ammonium ion exchange procedure already described to make them into respective Na$^+$ ion exchanged zeolites with varied amounts of ammonium sulfate so as to obtain their respective ion exchange degrees as shown in Figure 2.

In the ion exchanged isotherm of Figure 2, the ordinate (NH$_4$Z) represents NH$_4$$^+$ equivalent fractions of the total cation in the zeolite which are derived from the formula

$$NH_4Z = \frac{NH_4{}^+}{Na^+ + NH^+ + H^+}$$

and the abscissa (NH$_4$S) represents NH$_4$$^+$ equivalent fractions in the solution which are derived from the formula

$$NH_4S = \frac{NH_4{}^+}{Na^+ + NH_4{}^+}$$

Quite clearly, the modified zeolite (SAI-1) has enhanced ion exchange property over the conventional NaY zeolite.

Inventive Example 3

464 grams of NaY zeolite (Na$_2$O · Al$_2$O$_3$ · 5SiO$_2$ by mole composition) were subjected to repeated ion exchange in a manner well known in the art thereby preparing an ammoinum ion exchanged zeolite with 25% residual sodium ion. The zeolite was suspended in 4640 cc of 80°C water. A water glass (SiO$_2$/Na$_2$O = 3, diluted in silica concentration to 1%) was neutralized with sulfuric acid to prepare 5700 grams of silicic acid solution having a pH value of 2.0. 310 grams of this solution were added with stirring to the zeolite suspension and heated to 95°C. 5390 grams of the remaining silicic acid solution and 13720 grams of 2.5% sulfuric acid were added continuously over 50 hours at the rates of 107.8 grams per hour and 274.4 grams per hour, respectively, thereby adjusting the system to pH of 1.8. Thereafter, the zeolite was separated, washed and dried thereby obtaining a modified zeolite SAI-2 whose properties are shown in Table 2.

Comparative Example 2

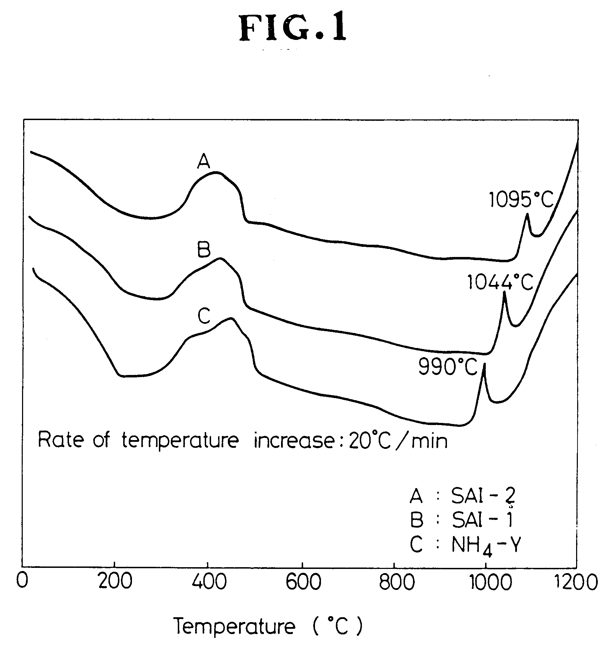

464 grams of NaY zeolite ($Na_2O \cdot Al_2O_3 \cdot 5SiO_2$ by mole composition) were repeatedly ion-exchanged to prepare an ammonium ion exchanged zeolite with 25% residual sodium ion. The zeolite was washed and dried, followed by calcination at 550°C for 3 hours. The calcined zeolite was further exchanged with ammonium sulfate thereby to obtain $NH_4$-Y zeolite having 91% ammonium ion exchanged and containing 1.37 weight % of $Na_2O$ corresponding to zeolite C in Figure 1. The resulting $NH_4$-Y zeolite was compared in differential thermal analysis with the zeolites of Inventive Examples 2 and 3 as shown in the graph of Figure 1. The rise and the fall in the curvature on the ordinate represent exothermic and endothermic, respectively. The curves A, B and C are neither superior nor inferior to one another on the ordinate and just are indicative of their respective peculiar exothermic and endothermic trends. The graph shows the occurrence of disruption of the crystal structure for A at 1095°C, for B at 1044°C and for C at 990°C, thus indicating superior thermal stability of the inventive modified zeolites compared to the conventional counterpart.

Inventive Example 4

464 grams of NaY zeolite ($Na_2O \cdot Al_2O_3 \cdot 5SiO_2$ by mole composition) were subjected to repeated ion exchange in the usual manner thereby preparing an ammonium ion exchanged zeolite with 25% residual sodium ion. The zeolite was suspended in 4640 cc of 80°C water. Silica sol of 30% silica was diluted to 1% silica concentration to prepare 5700 grams of diluted silica sol. 310 grams of this sol were added with stirring to the zeolite suspension and heated to 95°C. 5390 grabs of the remaining sol and 13720 grams of 2.5% sulfuric acid were added continuously over 100 hours at the rates of 23.9 grams per hour and 137.2 grams per hour, respectively, thereby adjusting the system in pH to 1.75. Thereafter, the zeolite was separated, washed and dried thereby obtaining a modified zeolite SAI-3 whose properties are shown in Table 2.

Inventive Example 5

The procedure of Inventive Example 3 was followed except that 10220 grams of 2.5% chloric acid were added continuously over 50 hours at a rate of 204.4 grams per hour. The resulting modified zeolite is referred to as SAI-4 and its properties are shown in Table 2.

Inventive Example 6

The procedure of Inventive Example 3 was followed except that 17640 grams of 2.5% nitric acid were added continuously over 50 hours at a rate of 352.4 grams per hour. The resulting modified zeolite SAI-5 is identified in Table 2.

Inventive Example 7

464 grams of starting NaY zeolite ($Na_2O \cdot Al_2O_3 \cdot 5SiO_2$ by mole composition) were suspended in 4640 cc of 80°C water. A water glass ($SiO_2/Na_2O = 3$, diluted in silica concentration to 1%) was dealkalized with an ion exchange resin to prepare 4500 grams of dealkalized silicic acid solution. 310 grams of this solution were added with stirring to the zeolite suspension and heated to 95°C. 4190 grams of the remaining silicic acid solution and 17538 grams of 1% ethylenediamine tretraacetate solution heated at 80°C were continuously added over 50 hours at the rates of 83.8 grams per hour and 350.8 grams per hour, respectively, thereby adjusting the system in pH to 3.8%. Thereafter, the zeolite was separated, washed and dried thereby obtaining a modified zeolite SAI-6 shown in Table 2.

Comparative Example 3

The procedure of Inventive Example 7 was followed in dealuminating the zeolite except that no silicic acid solution was used. The resulting zeolite NaY EDTA zeolite is identified in Table 2.

Comparative Example 4

A silicon substituted zeolite was prepared in accordance with the procedure described in Inventive Example 4 provided in the specification of U.S. Patent 4,711,770. 464 grams of NaY zeolite ($Na_2O \cdot Al_2O_3 \cdot 5SiO_2$ by mole composition) were subjected to repeated ion exchange in a well known manner thereby prepering an ammonium ion exchange zeolite having 25% residual sodium ion. The exchanged zeolite was heated to 75°C and suspended in 3.5 mole ammonium acetate solution. To the resulting suspension was added 650 cc aqueous solution of 75°C containing 120 grams $(NH_4)_2SiF_6$ at a rate of 4 cc per minute, followed by heating to 95°C and ageing at this temperature for 17 hours. The suspension, which showed a pH of 6.2, was filtered, washed and dried to obtain zeolite LY. This zeolite was checked for its ammonium ion exchange property by means of the procedure of Inventive Example 2, with the results shown in Figure 2 and other properties in Table 2.

Inventive Example 8

464 grams of NaY zeolite ($Na_2O \cdot Al_2O_3 \cdot 5SiO_2$ by mole composition) were subjected to repeated ion exchange in a manner well known in the art thereby preparing an ammoinum ion exchanged zeolite with 25% residual sodium ion. The zeolite was suspended in 4640 cc of 80°C water. A water glass ($SiO_2/Na_2O = 3$, diluted in silica concentration to 1%) was neutralized with sulfuric acid to prepare 4800 grams of silicic acid solution having a pH value of 2.0. 310 grams of this solution were added with stirring to the zeolite suspension and heated to 95°C. 4490 grams of the remaining silicic acid solution and 7840 grams of 2.5% sulfuric acid were added continuously at the rates of 187 grams per hour and 327 grams per hour, respectively.

A small amount of slurry was sampled each at intervals of 6 hours, 12 hours and 24 hours, respectively, following the addition of the above silicic acid solution and sulfuric acid. The resulting zeolites were separated, washed and dried to obtain respective modified zeolites SAI-7, SAI-8 and SAI-9 shown in Table 2.

Inventive Example 9

464 grams of NaY zeolite ($Na_2O \cdot Al_2O_3 \cdot 5SiO_2$ by mole composition) were subjected to repeated ion exchange to prepare an ammonium ion exchanged zeolite having 25% residual sodium ion. This zeolite was calcined at 550°C for three hours, followed by again ion exchanging to prepare an ammonium ion exchanged zeolite having 10% residual sodium ion. The resulting zeolite was washed and taken together with the same amount of water into a porcelain crucible for hydrothermal treatment at 650°C for 3 hours, thereby obtaining ultrastable Y zeolite (USY). This zeolite exhibited a crystallinity of 80% compared to the starting NaY material and a unit cell size of 24.54 Å. The zeolite was then suspended in 4640 cc of 80°C water. A water glass ($SiO_2/Na_2O = 3$, diluted in silica concentration to 1%) was neutralized with sulfuric acid to prepare 5700 grams of silicic acid solution having a pH value of 2.0. 310 grams of this solution were added with stirring to the zeolite suspension and heated to 95°C. 5390 grams of the remaining silicic acid solution and 1370 grams of 2.5% sulfuric acid were added continuously over 50 hours at the rates of 107.8 grams per hour and 274.4 grams per hour, respectively, thereby adjusting the system in pH to 1.65. Thereafter, the zeolite was separated, washed and dried thereby to obtain a modified zeolite SAI-8 shown in Table 2.

Inventive Example 10

412 grams of Na-Type mordenite zeolite ($Na_2O \cdot Al_2O_3 \cdot 5SiO_2$ by mole composition) were suspended in 4120 cc of 95°C water. A water glass ($SiO_2/Na_2O = 3$, diluted in silica concentration to 1%) was neutralized with sulfuric acid to prepare a silicic acid solution having a pH value of 2.0. 3600 grams of this solution and 1950 grams of 2.5% sulfuric acid were added to the suspension at 95°C at the rates of 150 grams per hour and 82 grams per hour, respectively, whereupon the suspention indicated a pH of 0.41. Thereafter, the zeolite was separated, washed and dried to obtain a modified zeolite M-1. Analysis of the separated solution indicated that alumina had been removed in an amount corresponding to 64.8% of total alumina in the starting material.

412 grams of Na-Type mordenite as another starting zeolite material were suspended in 4120 cc of 95°C water. The suspension held at 95°C was added with 1960 grams of 25% sulfuric acid at a rate of 82 grams per hour, followed by separation into solution and zeolite. Analysis of the solution indicated that alumina had been removed in an amount corresponding to 65.4% of total alumina in the starting material. The resulting zeolite was washed and dried thereby obtaining zeolite M-2.

A sample of each of zeolites M-1 and M-2 was suspended in 2% aluminum sulfate solution and heated with stirring to 95°C, followed by showly adding 3% dilute ammonium solution to adjust the suspension in pH to 2.5 and thereafter stirred at 95°C for 2 hours. The samples were washed and dried thereby obtaining treated zeolites M-1 and M-2, respectively, shown in Table 3.

It will be noted from the data in Table 3 that the $SiO_2/Al_2O_3$ mole ratio of zeolite M-2 approximates that of the starting material, whereas the same ratio with zeolite M-1 is higher than that of the starting material, indicating less alumina re-introduced into the mordenite crystal structure believably due to the supply of silicon at the dealuminated sites.

Table 2

| | zeolite | crystal-linity[1] (%) | unit cell size (A) | chemical analysis (D.B. wt %) | | | SiO$_2$/Al$_2$O$_3$ (mole ratio) | ammonium ion exchange degree[2] (0.9) |
|---|---|---|---|---|---|---|---|---|
| | | | | Na$_2$O | Al$_2$O$_3$ | SiO$_2$ | | |
| Control | NaY (starting material) | 100 | 24.67 | 13.36 | 21.98 | 64.66 | 5.0 | 0.69 |
| Inventive Example 2 | SAI-1 | 96 | 24.55 | 1.40 | 14.00 | 84.60 | 10.3 | 0.73 |
| Inventive Example 3 | SAI-2 | 100 | 24.44 | 0.44 | 9.30 | 90.30 | 16.5 | 0.77 |
| Comparative Example 2 | NH$_4$-Y | 100 | 24.67 | 1.33 | 24.37 | 74.36 | 5.2 | − |
| Inventive Example 4 | SAI-3 | 95 | 24.46 | 0.56 | 9.05 | 90.39 | 17.0 | 0.77 |
| Inventive Example 5 | SAI-4 | 100 | 24.43 | 0.42 | 8.90 | 90.68 | 17.3 | 0.77 |
| Inventive Example 6 | SAI-5 | 100 | 24.43 | 0.40 | 9.10 | 90.50 | 16.9 | 0.77 |
| Inventive Example 7 | SAI-6 | 98 | 24.54 | 9.25 | 15.86 | 74.89 | 8.0 | − |
| Comparative Example 3 | NaY EDTA | 68 | 24.65 | 10.19 | 17.47 | 72.34 | 7.0 | 0.64 |
| Comparative Example 4 | L.Y. | 85 | 24.52 | 1.70 | 16.22 | 82.08 | 8.6 | 0.67 |
| Inventive Example 8 | SAI-7 | 100 | 24.64 | 3.71 | 21.82 | 74.46 | 5.8 | 0.69 |
| | SAI-8 | 98 | 24.60 | 2.72 | 19.46 | 77.82 | 6.8 | 0.70 |
| | SAI-9 | 98 | 24.58 | 2.11 | 18.29 | 79.60 | 7.4 | 0.73 |
| Inventive Example 9 | SAI-10 | 86 | 24.39 | 0.16 | 8.53 | 91.31 | 18.2 | − |

Note: [1] Indicated is a relative value based on 100% crystallinity of starting NaY zeolite

[2] Ammonium ion exchange degree of zeolite at $NH_4^+$ equivalent fraction in solution of 0.9 as appears in the isotherm of FIG. 2.

EP 0 453 173 B1

Table 3

| | zeolite | crystallinity (%) | chemical analysis (D.B. wt %) | | | SiO$_2$/Al$_2$O$_3$ (mole ratio) |
|---|---|---|---|---|---|---|
| | | | Na$_2$O | Al$_2$O$_3$ | SiO$_2$ | |
| Inventive Example 10 | NaM (starting material) | 100 | 7.38 | 12.40 | 80.22 | 11.0 |
| | M-1 | 103 | 0.42 | 4.83 | 94.76 | 33.4 |
| | M-1 treated with aluminum sulfate | 102 | 0.40 | 9.77 | 89.83 | 15.6 |
| | M-2 | 98 | 0.44 | 5.05 | 94.50 | 31.8 |
| | M-2 treated with aluminum sulfate | 98 | 0.41 | 12.75 | 86.84 | 11.6 |

## Claims

1. A process for the manufacture of a modified crystalline aluminosilicate zeolite which comprises the steps of: (a) contacting a starting faujasite crystalline aluminosilicate zeolite having a silica/alumina mole ratio of not more than 6 and a unit cell size of 24.65Å or greater in an aqueous phase with a dealuminating agent selected from the group consisting of sulfuric acid, nitric acid and chloric acid at a pH value not exceeding 4 in the presence of a soluble silica present in an amount of not less than 130 ppm in said aqueous phase and derived from a soluble silica source selected from the group consisting of silicic acid, metasilicate, orthosilicate, disilicate, trisilicate and silica sol; and (b) recovering a modified faujasite crystalline aluminosilicate zeolite having a crystalline lattice with a silica/alumina mole ratio of more than 6 and a crystallinity of at least 91 % relative to that of said starting zeolite.

2. A process according to claim 1 wherein said dealuminating agent is added at a rate of less than 0.2 moles per hour per mole of zeolite suspended in said aqueous phase.

3. A process according to claim 1 wherein said starting faujasite zeolite comprises an ammonium-sodium Y zeolite.

4. A process according to claim 1 wherein said staring faujasite zeolite comprises a sodium Y zeolite.

5. A modified faujasite crystalline aluminisilicate zeolite composition which has a silica/alumina mole ratio of greater than 6 and an ammonium ion exchange degree of greater than 0.70 without having encountered a thermal history of above 150°C.

6. A composition according to claim 5 characterised in that said silica/alumina ratio is greater than 7.

7. A composition according to claim 5 characterised in that said ammonium ion exchange degree is greater than 0.72.

## Patentansprüche

1. Verfahren zur Herstellung von modifiziertem kristallinem Aluminosilikat-Zeolith, gekennzeichnet durch folgende Verfahrensschritte:

   (a) Einbringen eines faujasiten kristallinen Ausgangs-Aluminosilikat-Zeoliths mit einem Kieselerde/Aluminium-Molverhältnis von nicht größer als 6 und einer Zellgrößeneinheit von 24,65 Å oder größer in einer wässrigen Phase mit einem dealuminisierenden Mittel, das aus einer Gruppe ausgewählt ist, die Schwefelsäure, Salpetersäure und Chlorsäure mit einem pH-Wert von nicht mehr als 4 in Anwesenheit von löslicher Kieselerde umfaßt, die in der wässrigen Phase mit einem Anteil von nicht weniger als 130 ppm vorhanden ist und von einer löslichen Kieselerdequelle abgeleitet wurde, die aus einer Gruppe ausgewählt ist, die Kieselsäure, Metasilikat, Orthosilikat, Disilikat, Trisilikat und Kieselerdesol umfaßt und

(b) Wiedergewinnen eines modifizierten faujasiten kristallinen Aluminosilikat-Zeoliths mit einem kristallinen Gitter mit einem Kieselerde/Aluminium-Molverhältnis von größer als 6 und einer Kristallität von mindestens 91 % relativ zu derjenigen des Ausgangs-Zeoliths.

2. Verfahren nach Anspruch 1, bei dem das dealuminisierende Mittel mit einer Rate von weniger als 0,2 Mol pro Stunde und pro Mol des in der wässrigen Phase suspendierten Zeolithes zugesetzt wird.

3. Verfahren nach Anspruch 1, bei dem das faujasite Ausgangs-Zeolith ein Ammoniumnatrium-Y-Zeolith aufweist.

4. Verfahren nach Anspruch 1, bei dem das faujasite Ausgangs-Zeolith ein Natrium-Y-Zeolith aufweist.

5. Modifizierte faujasite kristalline Aluminiumsilikat-Zeolith-Zusammensetzung, mit einem Kieselerde/Aluminium-Molverhältnis von größer als 6 und einem Ammoniumionen-Austauschgrad von mehr als 0,70, ohne daß eine Temperatur von mehr als 150°C aufgetreten ist.

6. Zusammensetzung nach Anspruch 5, dadurch gekennzeichnet, daß das Kieselerde/Aluminiumverhältnis größer als 7 ist.

7. Zusammensetzung nach Anspruch 5, dadurch gekennzeichnet, daß der Ammoniumionen-Austauschgrad größer als 0,72 ist.

**Revendications**

1. Procédé pour la fabrication d'une zéolithe aluminosilicate cristalline modifiée qui comprend les étapes de : (a) mise en contact d'une zéolithe aluminosilicate cristalline faujasite de départ ayant un rapport en moles silice/alumine non supérieur à 6 et une taille de cellule unitaire de 24,65 Å ou plus dans une phase aqueuse avec un agent de désaluminisation choisi dans le groupe consistant de l'acide sulfurique, de l'acide nitrique, et de l'acide chlorique à une valeur de pH n'excédant pas 4 en présence d'une silice soluble présente en une quantité non inférieure à 130 ppm dans ladite phase aqueuse et dérivée d'une source de silice soluble choisie dans le groupe consistant de l'acide silicique, d'un métasilicate, d'un orthosilicate, un disilicate, un trisilicate et un sol de silice; et (b) récupération d'une zéolithe aluminosilicate cristalline faujasite modifiée ayant un réseau cristallin avec un rapport en moles silice/alumine de plus de 6 et une cristallinité d'au moins 91% par rapport à celle de ladite zéolithe de départ.

2. Procédé selon la revendication 1 dans lequel ledit agent de désaluminisation est ajouté à une vitesse inférieure à 0,2 mode par heure par mode de zéolithe mise en suspension dans ladite phase aqueuse.

3. Procédé selon la revendication 1 dans lequel ladite zéolithe faujasite de départ comprend une zéolithe Y ammonium-sodium.

4. Procédé selon la revendication 1 dans lequel ladite zéolithe faujasite de départ comprend une zéolithe Y sodium.

5. Composition de zéolithe aluminosilicate cristalline faujasite modifiée qui a un rapport en modes silice/alumine supérieur à 6 et un degré d'échange d'ions ammonium supérieur à 0,70 sans avoir eu un passé thermique supérieur à 150°C.

6. Composition selon la revendication 5 caractérisée en ce que ledit rapport silice/alumine est supérieur à 7.

7. Composition selon la revendication 5 caractérisée en ce que ledit degré d'échange d'ions ammonium est supérieur à 0,72.

# FIG.1

Rate of temperature increase: 20°C/min

A : SAI-2
B : SAI-1
C : NH$_4$-Y

Temperature (°C)

# FIG.2

○ SAI-1 (Inventive Example 2 )

▲ Starting material NaY

□ Zeolite - LY ( Comparative Example 4 )